# EUROPEAN PATENT APPLICATION

(11) **EP 3 061 667 A1**
(43) Date of publication of application: **31.08.2016**
(21) Application number: 15460005.0
(22) Date of filing: 25.02.2015
(51) Int. Cl.: B62B 7/06, B62B 7/10, B62B 9/10

(54) **STROLLER FRAME FOLDING MECHANISM**

(71) Applicant: Firma TUTEK Producent Wózków Dzieciecych Edward Tutakowski, 26-804 Stromiec (PL)
(72) Inventor: Wasilenko, Pawel, 46-320 Praszka (PL)
(74) Representative: Jedrzejewski, Michal

(57) **Abstract**

A stroller frame folding mechanism, in which the frame is equipped with two sets of locks, one for each side of the frame, whereas each set of locks includes the first slave lock (1; 2), the second slave lock (3; 4) and a slider (5), whereas the slider (5) is connected via a fixed linkage (8) with the first latch (6) placed in the movable part (1) of the first slave lock, whereas the first latch (6) in the closed position is inserted into the slot of the fixed part (2) of the first lock, whereas the flexible linkage (9) is connected with the movable part (1) of the first lock from one side, and, from the other, with the second latch (7) inserted into the movable part (3) of the second lock, whereas the second latch (7) in the closed position is inserted into the slot of the fixed part (4) of the second lock.

## Description

The subject of the invention is a stroller frame folding mechanism.

The prior art knows a stroller frame that is the subject of the Polish utility model application WU120993, wherein the lower ends of the profiled arms that constitute the rear supports are slanted towards the centre of the stroller, whereas dimension "A" i.e. the front wheel track is shorter than dimension "B" i.e. the free inner space between the rear wheels, whereas dimension "C" i.e. the distance from the joint pivot to the lower edge of the front wheels is shorter than the dimension that is equal to the distance from the joint pivot to the inner edge of the horizontal crosspiece that links the rear wheels, and an adequately profiled onlay preferably made of plastic, fastened to the frame with screws located in the through holes of the onlay and whose upper section includes an adequately shaped footrest, is put on the arch-shaped components of the front part of the frame.

The prior art also knows other frames from, among others, patent publications CN103010278 and CN203472942.

No solutions for such frames are known that would make it possible to shift the releasing piece, e.g. a slider and appropriately move the frame in order to release the two components that prevent the folding of the frame.

The stroller frame folding mechanism according to the invention is characterised in that the frame is equipped with two sets of locks, one for each side of the frame, whereas each set of locks includes the first slave lock, the second slave lock and a slider. The slider is connected via a fixed linkage with the first latch placed in the movable part of the first slave lock, whereas the first latch in the closed position is inserted into the slot of the fixed part of the first lock, and the flexible linkage is connected with the movable part of the first lock from one side, and, from the other, with the second latch inserted into the movable part of the second lock, whereas the second latch in the closed position is inserted into the slot of the fixed part of the second lock.

Preferably, at least one of the sliders has an additional button that, if not pressed-in, locks the movement of the slider.

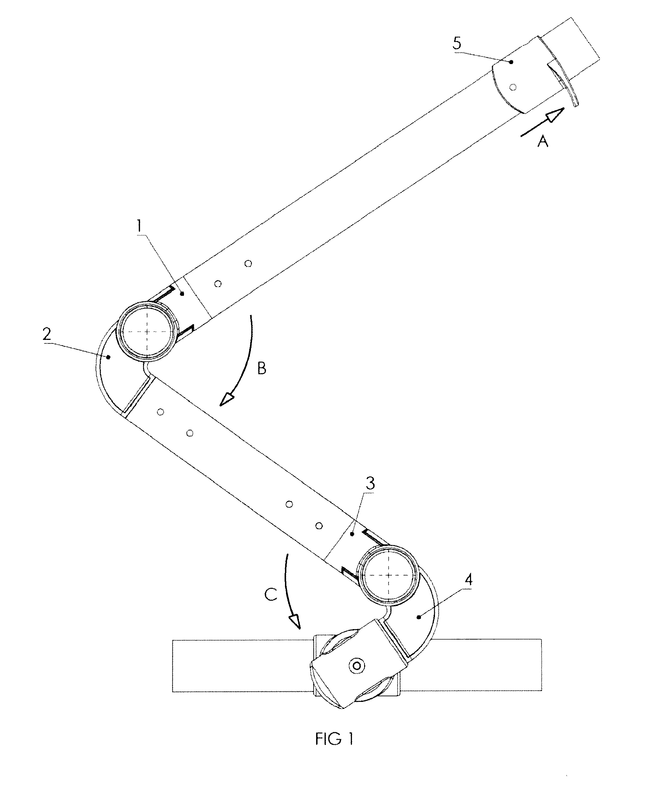

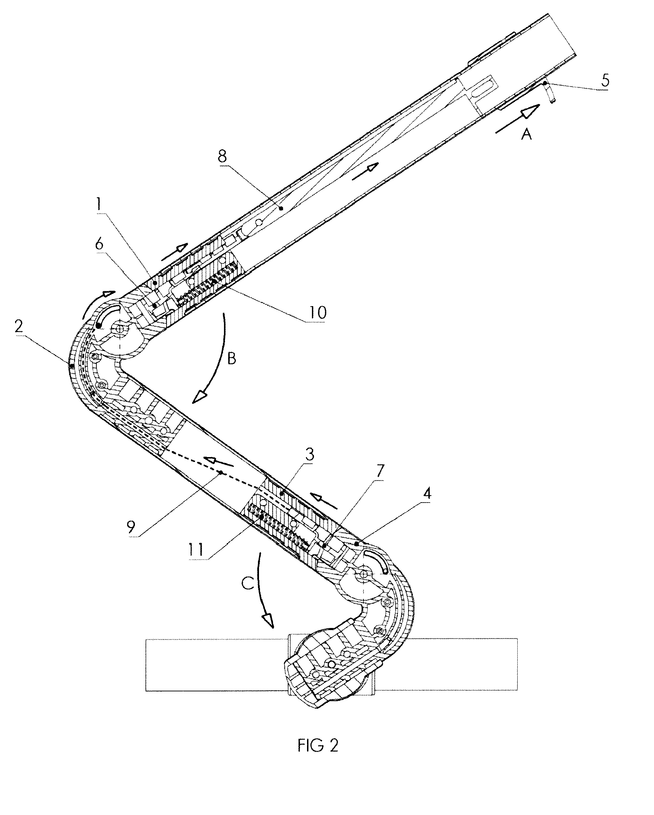

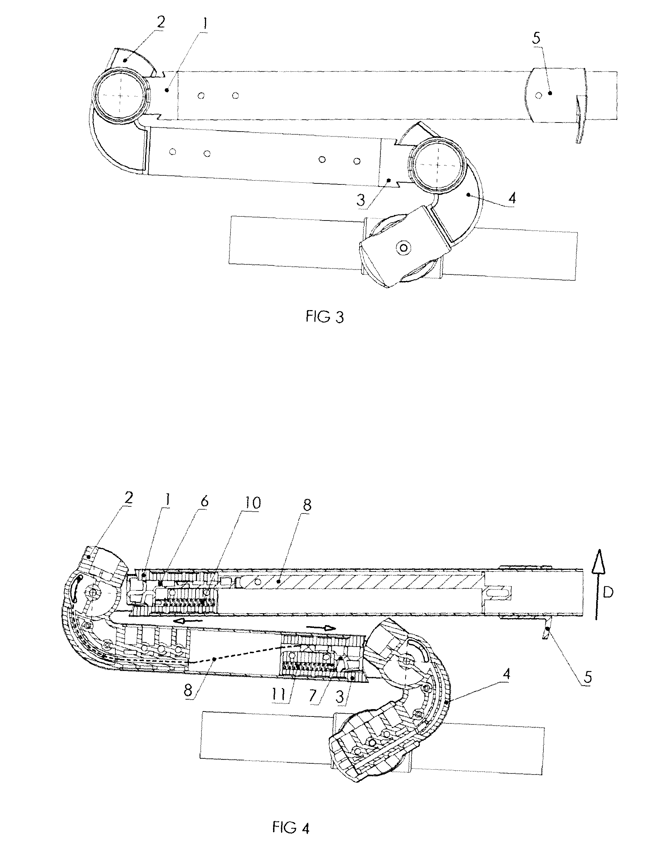

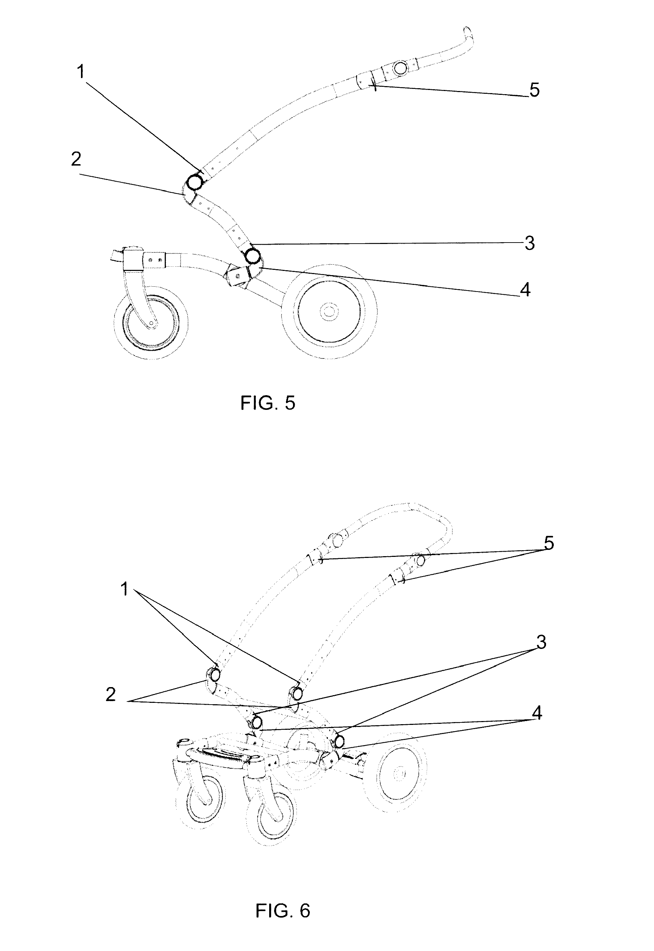

The subject of the invention is shown as an embodiment in figures, in which Fig. 1 shows a part of the frame with the outer components of the folding mechanism of the frame unfolded, Fig. 2 - cross-section of a part of the frame with the inner components of the folding mechanism of the frame unfolded, Fig. 3 - part of the frame with the outer components of the folding mechanism of the frame folded, Fig. 4 - cross-section of a part of the frame with the inner components of the folding mechanism of the frame unfolded, whereas Figs. 5 and 6 - example frame with the mechanism according to the invention.

The stroller frame folding mechanism, the frame is equipped with two sets of locks, one for each side of the frame, whereas each set of locks includes the first slave lock (1; 2), the second slave lock (3; 4) and a slider (5). The slider (5) is connected via a fixed linkage (8) with the first latch (6) placed in movable part (1) of the first slave lock. The first latch (6) in the closed position is inserted into the slot of the fixed part (2) of the first lock. The flexible linkage (9) is connected with the movable part (1) of the first lock from one side, and, from the other, with the second latch (7) inserted into the movable part (3) of the second lock, whereas the second latch (7) in the closed position is inserted into the slot of the fixed part (4) of the second lock. Additionally, one of the sliders (5) has an additional button that, if not pressed-in, locks the movement of the slider (5).

Both locks are opened simultaneously by making the following two movements: moving the slider (5) - movement A, and making a tilting movement - movement B, with respect to the common axis of rotation of the first slave lock (1; 2). Moving the slider (5) (movement A) sets in motion both the fixed linkage (8) and the latch (6) thus extending the latch (6) from the fixed part (2) of the first slave lock and unlocking the movable part (1) of the first slave lock. Tilting the entire assembly (movement B) moves the flexible linkage (9) and the latch (7) at the same time. Movement B unlocks the movable part (3) of the second slave lock. Movement B extends the latch (7) from the slot of the fixed part (4) of the second slave lock and unlocks the entire assembly of the two slave locks. Further tilting (movement B and C) completely folds the frame.

Movement D returns the assembly to the previous state i.e. closes the slave locks. The locks are closed by means of springs (10; 11), which move the latches (6, 7) to the slots of the fixed parts (2; 4) of both locks. Only one movement (movement D) is needed to close both locks.

## Claims

1. A stroller frame folding mechanism **characterised in that** the frame is equipped with two sets of locks, one for each side of the frame, whereas each set of locks includes the first slave lock (1; 2), the second slave lock (3; 4) and a slider (5), whereas the slider (5) is connected via a fixed linkage (8) with the first latch (6) placed in movable part (1) of the first slave lock, whereas the first latch (6) in the closed position is inserted into the slot of the fixed part (2) of the first lock, whereas the flexible linkage (9) is connected with the movable part (1) of the first lock from one side, and, from the other, with the second latch (7) inserted into the movable part (3) of the second lock, whereas the second latch (7) in the closed position is inserted into the slot of the fixed part (4) of the second lock.

2. The stroller frame folding mechanism according to claim 1 **characterised in that** at least one of the sliders (5) has an additional button that, if not pressed-in, locks the movement of the slider (5).
